Europäisches Patentamt

European Patent Office

Office européen des brevets

(11) Veröffentlichungsnummer : **0 370 589 B1**

# (12) EUROPÄISCHE PATENTSCHRIFT

(45) Veröffentlichungstag der Patentschrift :
24.07.91 Patentblatt 91/30

(51) Int. Cl.⁵ : **B62D 65/00,** B65G 35/08

(21) Anmeldenummer : 89250085.1

(22) Anmeldetag : 13.11.89

(54) Transportvorrichtung mit einer Fliessfertigungsstrasse.

(30) Priorität : 25.11.88 DE 3840256

(43) Veröffentlichungstag der Anmeldung :
30.05.90 Patentblatt 90/22

(45) Bekanntmachung des Hinweises auf die
Patenterteilung :
24.07.91 Patentblatt 91/30

(84) Benannte Vertragsstaaten :
BE DE FR GB IT NL SE

(56) Entgegenhaltungen :
EP-A- 0 134 255
DE-A- 2 835 565
DE-A- 3 100 159

(73) Patentinhaber : MANNESMANN
Aktiengesellschaft
Mannesmannufer 2
W-4000 Düsseldorf 1 (DE)

(72) Erfinder : Gilbert, Arthur
Am Brückelgraben 3
W-6700 Ludwigshafen (DE)
Erfinder : Gottstein, Norbert, Dipl.-Ing. (FH)
Frühlingsstrasse 17
W-6940 Weinheim (DE)
Erfinder : Rostock, Joachim, Dipl.-Ing. (FH)
Hanschuhsheimer Landstrasse 19
W-6900 Heidelberg (DE)

(74) Vertreter : Meissner, Peter E., Dipl.-Ing. et al
Patentanwaltsbüro Meissner & Meissner,
Herbertstrasse 22
W-1000 Berlin 33 (DE)

EP 0 370 589 B1

**Beschreibung**

Die Erfindung betrifft eine Transportvorrichtung für eine Fließfertigungsstraße, z. B. für die Montage von Fahrzeugkarosserien, auf verfahrbaren Plattformen, die auch als Skids bezeichnet werden.

Bei einer derartigen Transportvorrichtung nach der DE-A-31 00 159 sind die Fließfertigungsstraßen oft in aufwendiger Weise in dem Boden eingelassen und auf dort verlegten Tragschienen geführt. Der Antrieb erfolgt über eine umlaufende Antriebskette, die sich über die gesamte Länge der Fließfertigungsstraße erstreckt.

Durch das Einlassen der eigentlichen Fließfertigungsstraße in den Boden wird eine Fabrikanlage unnötig teuer und kann nur geändert werden, wenn der gesamte Boden erneuert wird. Da hierbei der statische Verbund eines Gebäudes nicht mehr gewährleistet ist, sind Gebäudeschäden bei derartigen Änderungen nicht auszuschließen.

Aufgabe der Erfindung ist es daher, eine Transportvorrichtung für eine Fließfertigungsstraße weniger aufwendig und variabel zu gestalten. Diese Aufgabe wird dadurch gelöst, daß die Plattformen auf ortsfesten Tragrollen verfahrbar und von ortsfesten Antriebsrädern antreibbar sind, die nur am Anfang einer jeden Fließfertigungsstraße angeordnet sind und an den Seitenträgern der in diesem Bereich befindlichen Plattformen abrollen, deren vordere und hintere Querträger aneinander anliegen und alle Plattformen einer Fließfertigungsstraße schieben.

Die Oberkanten der Plattformen liegen auf einer Höhe von ca. 200 mm, das ist eine normale Stufenhöhe an Treppen und wird, wenn die Kante der Plattform gekennzeichnet ist, von den Arbeitern im Unterbewußtsein überschritten. Durch die leicht erhöhte Anordnung der Arbeitsplattformen entstehen keine Nachteile für den Arbeitsablauf, während die Herstellungskosten der Transportvorrichtung wesentlich reduziert sind und nachträgliche Änderungen problemlos vorgenommen werden können.

Die Antriebsräder sind in weiterer Ausgestaltung der Erfindung Reibräder und deren Motoren sind Bremsmotoren. Sie üben im eingeschalteten Zustand stets eine Antriebskraft aus.

Es sind mehrere Reibräder direkt hintereinander angeordnet und über eine Antriebskette miteinander und mit dem Bremsmotor verbunden. Am Ende einer jeden Fließfertigungsstraße ist ein mit Reibrädern an der Plattform anliegender bremsbarer Stillstandsmotor vorhanden, der dafür sorgt, daß alle Plattformen einer Fließfertigungsstraße stets aneinander anliegen. Zum Transport der Plattformen einer Fließfertigungsstraße werden entweder die Antriebskräfte der Bremsmotoren am Beginn der Fließfertigungsstraße mit einer zusätzlichen Leistungsaufnahme beaufschlagt oder die Stillstandsmotoren am Ende der Fließfertigungsstraße werden in der Leistungsaufnahme reduziert, so daß jede gewünschte Transportgeschwindigkeit erzielt werden kann.

Der Abstand zwischen den Tragrollen beträgt je nach Plattform etwa 600 mm. Sie können außer um senkrechte Achsen drehbare, an Führungsschienen anliegende Führungsrollen auch je einen Scherenhubtisch für das Fördergut haben.

Am Anfang und am Ende einer jeden Fließfertigungsstraße sind Hub- und Senkstationen sowie Querförderer vorhanden, die angetriebene Rollenbahnen sein können.

Mehrere Ausführungsbeispiele der Erfindung sind in den Zeichnungen dargestellt und im folgenden erläutert. Es zeigen :

Fig. 1     einen Teil einer Transportvorrichtung in der Draufsicht,
Fig. 2     den Anfang einer Fließfertigungsstraße,
Fig. 3     das Ende einer Fließfertigungsstraße,
Fig. 4     einen Übergang von Quer- auf Längsförderung,
Fig. 5     einen Querschnitt durch eine Fließfertigungsstraße in größerem Maßstab,
Fig. 6     einen Querschnitt durch einen Querförderer der Anlage,
Fig. 7     eine Seitenansicht einer Plattform mit einem PKW,
Fig. 8     eine Draufsicht auf eine Antriebseinheit,
Fig. 9     einen Querschnitt durch ein Reibrad mit Antrieb.

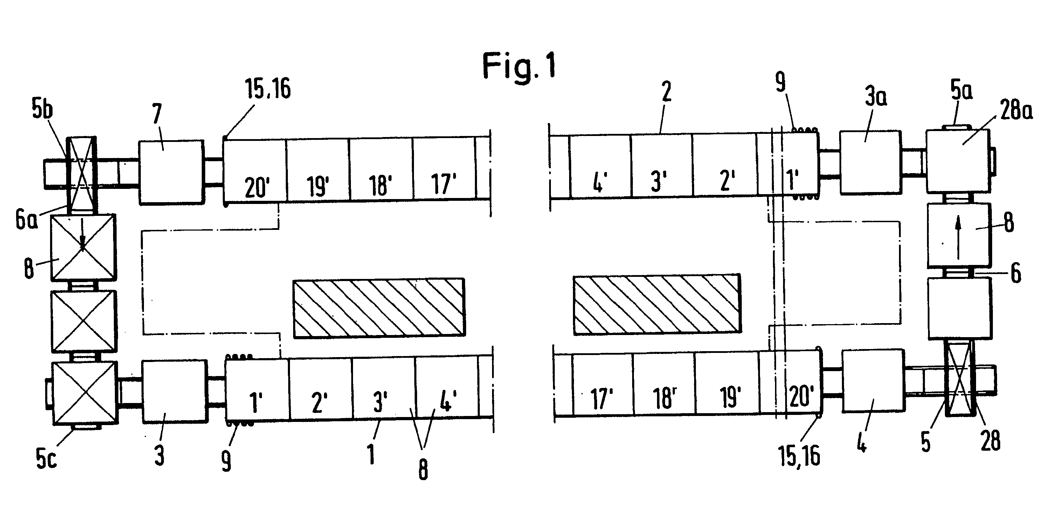

Die in Figur 1 gezeichnete Transportvorrichtung hat zwei Fließfertigungsstraßen 1 und 2 für entgegengesetzte Arbeitsrichtungen, jeweils mit den Arbeitsplätzen 1' bis 20'. Die zu fertigenden Karosserien werden auf dem Startplatz 3 in den Transportumlauf gegeben und über die Fließfertigungsstraße 1 mit einer Zwischenstation 4 über einen Eckumsetzer 5 zu einem Querförderer 6 geleitet. Dieser führt sie über einen weiteren Eckumsetzer 5a zu einem Startplatz 3a am Beginn der Fließfertigungsstraße 2, an deren Ende eine Endstation 7 vorhanden ist.

Dort werden die fertigen Fahrzeuge von den Plattformen 8 abgenommen, die über die Eckumsetzer 5b und 5c sowie den Querförderer 6a wieder zum Startplatz 3 geführt werden, wo sie mit neuen Karosserien beladen werden.

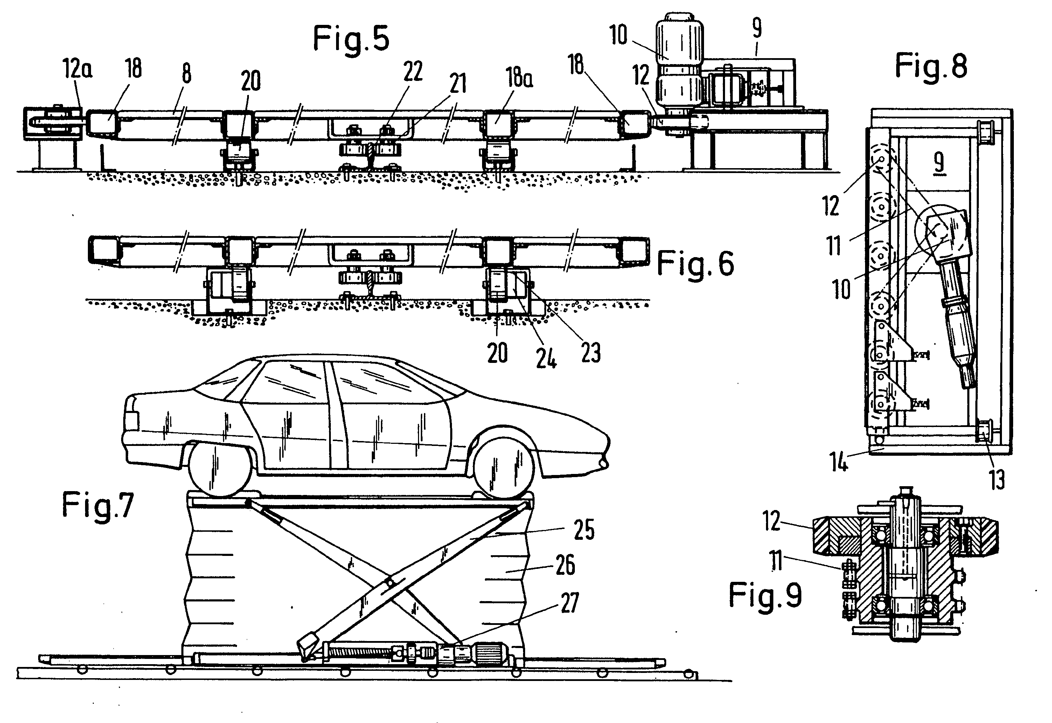

Die Fließfertigungsstraßen 1 und 2 haben am Anfang, also hinter den Startplätzen 3 und 3a Antriebseinheiten 9, die alle aneinanderliegenden Plattformen 8 einer Fertigungsstraße gleichzeitig schieben. Jeweils ein Bremsmotor 10 ist über Antriebsketten 11 mit allen Reibrädern 12 einer Antriebseinheit verbunden, wie die Figuren 8 und 9 zeigen. Jede Antriebseinheit 9 ist über Federn 13 so in einem gemeinsamen Rahmen 14 angeordnet, daß die Reibräder 12 gegen Seitenträger 18 der Plattformen 8 gedrückt werden.

Die Fließfertigungsstraßen 1 und 2 haben an ihren Enden Stillstandsmotoren 15, deren Reibräder 16 an der jeweils in Transportrichtung vorderen Plattform 8 der Fertigungsstraße anliegen und ein unbeabsichtigtes Auseinanderrollen der Plattformen 8 einer Reihe verhindern. Die Stillstandskraft dieser Stillstandsmotoren 15 wird nur von der Antriebskraft der Bremsmotoren 10 überwunden. Die Plattformen 8 gelangen dann über eine Förderbahn nach Art einer Rollenbahn oder eines Bandförderers zu der Zwischenstation 4 und weiter zu dem Eckumsetzer 5. Hier werden die Plattformen 8 von einer Hubstation 28 des Querförderers 6 angehoben und zum Eckumsetzer 5a der Fließfertigungsstraße 2 transportiert. Dort wird sie in einer Senkstation 28a auf eine Förderbahn abgesetzt und über den Startplatz 3a zum Anfang der Fließfertigungsstraße 2 gefördert, wo sie wieder von den sich gegenüberliegenden Antriebseinheiten 9 erfaßt und weitergeschoben werden. Nach dem Durchlaufen der Fließfertigungsstraße 2, wobei sie von den Stillstandsmotoren 15 gebremst werden, gelangen die Plattformen 8 zur Endstation, wo die Karosserie abgenommen wird bzw. das fertige Fahrzeug von der Fließfertigungsstraße auf eigenen Rädern abrollt. Die Plattformen werden dann wieder über den Querförderer 6a zur Fließfertigungsstraße 1 gebracht und am Startplatz 3 mit einer neuen Karosserie beladen.

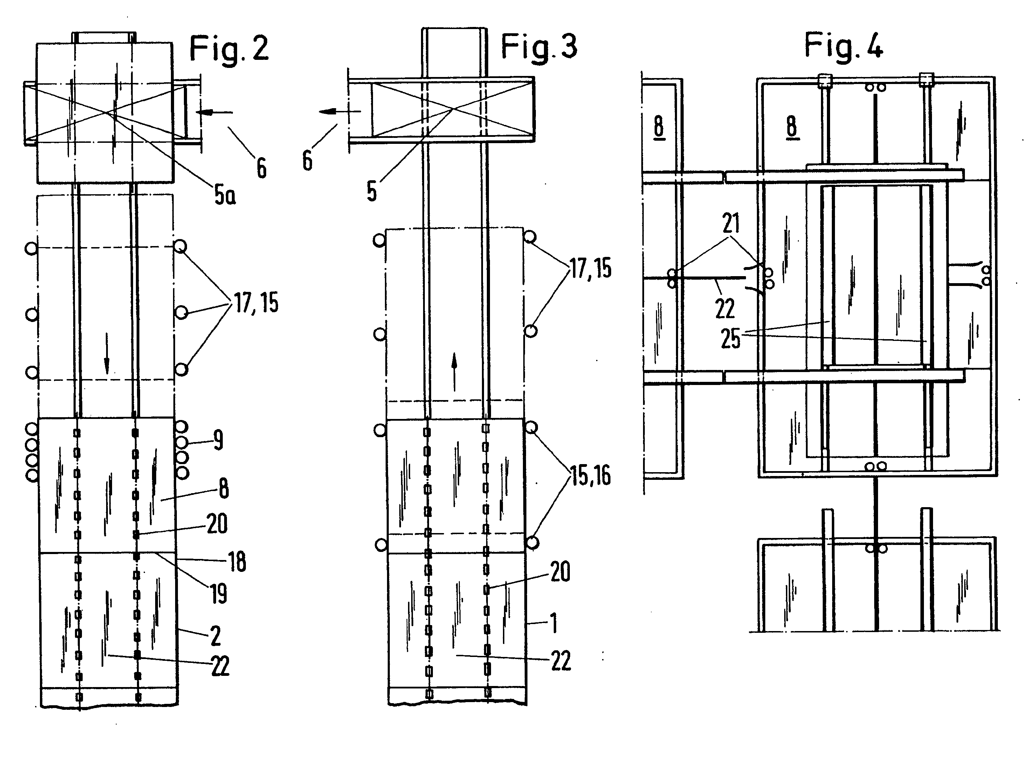

Anstelle der Förderbahnen können die Bereiche der Zwischenstationen 3, 4, 3a und 4a auch gesteuerte Fahrantriebe 17 haben, deren Reibräder 15 in den Figuren 2 und 3 zu erkennen sind.

Die Plattformen 8 werden mit ihrer ebenen Unterfläche am inneren Längsträger 18a über die ortsfesten Tragrollen 20 geleitet und von Führungsrollen 21 am senkrechten Steg einer T-förmigen Führungsschiene 22 geführt, wie die Figuren 4 bis 6 zeigen. In Figur 5 ist auch die Antriebseinheit 9 mit dem Bremsmotor 10 und dem Reibrad 12 zu erkennen. Das gegenüberliegende Reibrad 12a ist in diesem Falle nicht angetrieben und verbessert die Führung im Antriebsbereich der Fließfertigungsstrecke.

Figur 6 zeigt einen Querschnitt durch die Bereiche der Startplätze 3, 3a und Zwischenstationen 4 und 4a mit Antriebszahnriemen 23 für Zahnräder 24 der Tragrollen 20.

Figur 7 zeigt einen Scherenhubtisch 25 mit einem Schutzbalg 26, der gefährliche Berührungen des Hubantriebes 27 verhindert.

## Patentansprüche

1. Transportvorrichtung für eine Fließfertigungsstraße, z.B. für die Montage von Fahrzeugkarosserien, auf verfahrbaren Plattformen, dadurch gekennzeichnet, daß die Plattformen (8) auf ortsfesten Trägerrollen (20) verfahrbar und von ortsfesten Antriebsrädern (9) antreibbar sind, die nur am Anfang einer jeden Fließfertigungsstraßen (1, 2) angeordnet sind und an den Seitenträgern (18) der in diesem Bereich befindlichen Plattformen (8) abrollen, deren vordere und hintere Querträger (19) aneinander anliegen und alle Plattformen einer Fließfertigungs-straße schieben.

2. Transportvorrichtung nach Anspruch 1, dadurch gekennzeichnet, daß die Antriebsräder Reibräder (12) sind.

3. Transportvorrichtung nach Anspruch 1, dadurch gekennzeichnet, daß die Motoren der Reibradantriebe Bremsmotoren (10) sind.

4. Transportvorrichtung nach Anspruch 1, dadurch gekennzeichnet, daß mehrere Reibräder (12) direkt hintereinander angeordnet und über eine Antriebskette (11) miteinander und mit dem Bremsmotor (10) verbunden sind.

5. Transportvorrichtung nach einem oder mehreren der vorgenannten Ansprüche, dadurch gekennzeichnet, daß am Ende einer jeden Fließfertigungsstraße (1, 2) mit Reibrädern (16) an den Plattformen (8) anliegende bremsbare Stillstandsmotore (15) vorhanden sind.

6. Transportvorrichtung nach Anspruch 1, dadurch gekennzeichnet, daß der Abstand zwischen den ortsfesten Tragrollen (20) etwa 600 mm beträgt.

7. Transportvorrichtung nach Anspruch 1, dadurch gekennzeichnet, daß die Plattformen (8) biegeweich sind.

8. Transportvorrichtung nach Anspruch 1, dadurch gekennzeichnet, daß die Plattformen (8) um senkrechte Achsen drehbare, an einer Führungsschiene (22) anliegende Führungsrollen (21) haben.

9. Transportvorrichtung nach einem oder mehreren der vorgenannten Ansprüche, dadurch gekennzeichnet, daß am Anfang und am Ende der Fließfertigungsstraßen (1, 2) Hub- und Senkstationen (28) sowie Eckumsetzer (5) und antreibbare Querförderer (6) vorhanden sind.

10. Transportvorrichtung nach Anspruch 9, dadurch gekennzeichnet, daß die Querförderer (6) antreibbare Rollenbahnen sind.

11. Transportvorrichtung nach Anspruch 1, dadurch gekennzeichnet, daß die Plattformen (8) Scherenhubtische (25) für das Fördergut (Karosserien) haben.

## Claims

1. Transport device for a continuous production line, e.g. for the assembly of vehicle bodies, on movable platforms, characterised in that the platforms (8) are movable on fixed support rollers (20) and can be driven by fixed drive wheels (9) which are arranged only at the beginning of each of the continuous production lines (1, 2) and roll on the lateral bars (18) of the platforms (8) located in this region, the front and rear transverse bars (19) of which platforms lie against each other and push all the platforms of a continuous production line.

2. Transport device according to Claim 1, characterised in that the drive wheels (9) are frictional wheels (12).

3. Transport device according to Claim 1, characterised in that the motors of the frictional wheel drives are brake motors (10).

4. Transport device according to Claim 1, characterised in that a plurality of frictional wheels (12) are arranged directly one behind the other and are connected to each other and to the brake motor (10) via a drive chain (11).

5. Transport device according to one or more of the preceding Claims, characterised in that stoppage motors (15) which can be braked and which lie on the platforms (8) with frictional wheels (16) are present at the end of each continuous production line (1, 2).

6. Transport device according to Claim 1, characterised in that the distance between the fixed support rollers (20) is approximately 600 mm.

7. Transport device according to Claim 1, characterised in that the platforms (8) are flexible.

8. Transport device according to Claim 1, characterised in that the platforms (8) have guide rollers (21) which are pivotable about vertical axes and which lie on a guide rail (22).

9. Transport device according to one or more of the preceding Claims, characterised in that raising and lowering stations (28) and also corner changeover means (5) and drivable transverse conveyors (6) are present at the start and at the end of the continuous production lines (1, 2).

10. Transport device according to Claim 9, characterised in that the transverse conveyors (6) are drivable roller conveyors.

11. Transport device according to Claim 1, characterised in that the platforms (8) have scissor-type elevating platforms (25) for the material to be conveyed (vehicle bodies).

## Revendications

1. Dispositif de transport pour une chaîne de fabrication, par exemple pour le montage de carrosseries de véhicule, sur des plates-formes mobiles, caractérisé en ce que les plates-formes (8) peuvent être déplacées sur des galets porteurs fixes (20) et peuvent être entraînées par des roues d'entraînement fixes (9), qui ne sont agencées qu'au début de chaque chaîne de fabrication (1, 2) et roulent sur les supports latéraux (18) des plates-formes (8) se trouvant dans cette zone, dont les supports transversaux avant et arrière (19) sont adjacents et déplacent toutes les plates-formes d'une chaîne de fabrication.

2. Dispositif de transport selon la revendication 1, caractérisé en ce que les roues d'entraînement sont des roues à friction (12).

3. Dispositif de transport selon la revendication 1, caractérisé en ce que les moteurs des roues à friction sont des moto-freins (10).

4. Dispositif de transport selon la revendication 1, caractérisé en ce que plusieurs roues à friction (12) sont agencées directement l'une derrière l'autre, et sont reliées au moto-frein (10) et ensemble par une chaîne d'entraînement (11).

5. Dispositif de transport selon une ou plusieurs des revendications précédentes, caractérisé en ce que, à la fin de chaque chaîne de fabrication (1, 2), sont prévus des moteurs (15) freinables, s'appuyant contre les plates-formes (8) par des roues à friction (16).

6. Dispositif de transport selon la revendication 1, caractérisé en ce que la distance entre les galets porteurs fixes (20) s'élève à environ 600 mm.

7. Dispositif de transport selon la revendication 1, caractérisé en ce que les plates-formes (8) peuvent être cintrées.

8. Dispositif de transport selon la revendication 1, caractérisé en ce que les plates-formes (8) présentent des galets de guidage (21) s'appuyant contre un rail de guidage (22), et pouvant tourner autour d'axes verticaux.

9. Dispositif de transport selon une ou plusieurs des revendications précédentes, caractérisé en ce que, au début et à la fin des chaînes de fabrication (1, 2), sont prévus des postes de levage et d'abaissement (28), ainsi qu'un dérivateur d'angle (5) et des transporteurs transversaux entraînables (6).

10. Dispositif de transport selon la revendication 9, caractérisé en ce que les transporteurs transversaux (6) sont des transporteurs à rouleaux entraînables.

11. Dispositif de transport selon la revendication 1, caractérisé en ce que les plates-formes (8) présentent des tables de levage à parallélogramme articulé (25) pour le produit transporté (carrosseries).

Fig.1

Fig. 4

Fig. 3

Fig. 2

Fig.8

Fig.9

Fig.5

Fig.6

Fig.7